# EUROPEAN PATENT APPLICATION

(11) **EP 4 287 375 A1**
(43) Date of publication of application: **06.12.2023**
(21) Application number: 22215633.3
(22) Date of filing: 21.12.2022
(51) Int. Cl.: H01M 50/209, H01M 50/242, H01M 50/264, H01M 50/211, H01M 50/289, H01M 50/291

(54) **BATTERY MODULE AND ELECTRONIC DEVICE**

(30) Priority: 02.06.2022 CN 202210626382; 29.09.2022 CN 202211203986
(71) Applicant: AESC Japan Ltd., Kanagawa, 2520012 (JP)
(72) Inventor: BAI, Yulong, Wuxi City, Jiangsu Province (CN); SONG, Zhiqi, Wuxi City, Jiangsu Province (CN); FU, Fangkai, Wuxi City, Jiangsu Province (CN); HE, Yafei, Wuxi City, Jiangsu Province (CN)
(74) Representative: Becker, Eberhard

(57) **Abstract**

The disclosure relates to the technical field of batteries, and in particular, to a battery module and an electronic device. The battery module includes a frame (1), a cell (2), a position-limiting member (3), and a buffer member (4). A plurality of the cells (2) are stacked in the frame (1) in parallel. The position-limiting member (3) is disposed in the frame (1), and divides the frame (1) into a plurality of spaces for the cells (2) being evenly arranged. A plurality of the buffer members (4) are respectively disposed between the adjacent cells (2) and/or between the cell (2) and the frame (1).

## Description

### BACKGROUND

### Technical Field

The present disclosure relates to the technical field of batteries, and in particular, to a battery module and an electronic device.

### Description of Related Art

As the core of three crucial technologies for new energy vehicles, power batteries have received increased attention. The swelling of cells of a module is one of the problems to be solved urgently. Cell swelling not only occurs when the battery undergoes thermal runaway or aging, but also occurs even during normal charging and discharging. The swelling of cell will cause other structures inside the power battery to deform.

As one of the solutions to the safety problem, all-solid-state battery has been developed to significantly reduce the risk of thermal runaway of the cell containing liquid. However, the cells of the all-solid-state battery module still swell during the electrochemical reaction process. The volume increase caused by the swelling of the cell and the squeezing force caused by the swelling of the cell to the surrounding structure should not be ignored. The deformation displacement and thrust generated by the swelling of all internal cells will be transmitted and accumulated to the outermost cell, which will eventually exert a very large thrust on the module side plate from the outermost cell. A conventional side plate is a rigidly fixed single plate, and it cannot be ensured that such side plate is able to completely resist or absorb the thrust when being subjected to the same. Therefore, deformation and cracking of the side plate, deformation and failure of thermal conductive adhesive, structural adhesive, tab welding, etc. on the module housing, and even fracture of connection of the side plate as well as damage of the module are likely to occur.

Therefore, there is a need of developing a battery module for solving the above problem.

### SUMMARY

A purpose of the present disclosure is to provide a battery module, which is able to effectively absorb the swelling displacement of cells, especially the swelling displacement of the outermost cell, reduce the swelling force caused by the cell on a side plate, and improve the safety of a battery module.

Another purpose of the present disclosure is to provide an electronic device. By applying the above battery module to the electronic device, the amount of thermal swelling of the battery module is small, the performance of the battery module is stable, and the safety of the electronic device is improved.

To achieve the above purposes, the following technical solutions are provided.

In a first aspect, a battery module is provided, and includes a frame, a plurality of cells , at least one position-limiting member and a plurality of buffer members. The cells are stacked in the frame in parallel. The position-limiting member is disposed in the frame, and divides the frame into a plurality of spaces for the cells being evenly arranged. The buffer members are respectively disposed between the adjacent cells and/or between the cell and the frame.

As an optional solution of the battery module, an energy absorbing member is further included, and the energy absorbing member is arranged at a position adjacent to the position-limiting member.

As an optional solution of the battery module, the energy absorbing member is provided with a plurality of energy absorbing portion, and the energy absorbing portions are arranged at intervals on the energy absorbing member in the same shape.

As an optional solution of the battery module, each of the energy absorbing portions is formed in a protruding shape, and the adjacent energy absorbing portions protrude in opposite directions.

As an optional solution of the battery module, both sides of the position-limiting member are provided with the energy absorbing members, and the two energy absorbing members provided on both sides of the position-limiting member are symmetrical with respect to the position-limiting member.

As an optional solution of the battery module, a positioning member is further included. The positioning member connects the energy absorbing member and the position-limiting member in a movable manner, so that the energy absorbing member may move close to or away from the position-limiting member within a certain distance along the direction in which the cells are arranged.

As an optional solution of the battery module, each of the buffer members includes an outer frame portion and a buffer portion, and a hardness of the outer frame portion is greater than a hardness of the buffer portion.

As an optional solution of the battery module, the frame includes a bottom plate and an upper cover, and at least one of the bottom plate and the upper cover is provided with a positioning groove for at least a part of the position-limiting member to be embedded and positioned.

As an optional solution of the battery module, each of the spaces divided by the position-limiting member has 3 to 9 of the cells respectively.

In a second aspect, an electronic device is provided, which includes the battery module as described above.

Compared with the related art, the advantageous effects of the present disclosure are:

The battery module provided by the present disclosure includes a frame, a plurality of cells, at least one position-limiting member and a plurality of buffer members. By utilizing the elastic deformation of the buffer members to absorb the amount of swelling of the cells, it is possible to reduce the outward displacement caused by the swelling of the cells. In the meantime, since the position-limiting member divides the frame into multiple independent spaces, the total amount of displacement caused by the swelling of all cells of the module is separated in various spaces, and the swelling force caused by the swelling displacement is also shared by various position-limiting members. In this manner, the swelling displacement accumulated at the outermost cell is reduced, and the thrust caused by the swelling displacement and applied to the side wall is reduced, so that it is possible to effectively prevent excessive swelling displacement from causing rupture and failure of the tab welding portion of the outermost cell, thereby significantly improving the safety of the battery module.

In the electronic device provided by the present disclosure, by applying the above-mentioned battery module to the electronic device, the amount of thermal swelling of the battery module may be reduced, so that the performance of the battery module may be more stable, and the safety of the electronic device may be improved.

### BRIEF DESCRIPTION OF THE DRAWINGS

FIG. 1 is a schematic view of a structure of a battery module according to an embodiment of the present disclosure.
FIG. 2 is a schematic view of a stacked structure of cells inside a battery module according to an embodiment of the present disclosure.
FIG. 3 is a schematic view of a structure of a buffer member according to an embodiment of the present disclosure.
FIG. 4 is a schematic view of an example of configuration of a position-limiting member and an energy absorbing member provided by an embodiment of the present disclosure.
FIG. 5 is a schematic structural view of the position-limiting member and the energy absorbing member in an assembled state according to an embodiment of the present disclosure.
FIG. 6 is a schematic view of a setting position and a specific structure of the energy absorbing member according to an embodiment of the present disclosure.
FIG. 7 is a schematic view of another example of configuration of the position-limiting member and the energy absorbing member provided by an embodiment of the present disclosure.
FIG. 8 is an enlarged view of place A in FIG. 7.
FIG. 9 is a schematic structural view of a first energy absorbing mechanism provided by an embodiment of the present disclosure.
FIG. 10 is a schematic structural view of a first energy absorbing assembly in the first energy absorbing mechanism provided by an embodiment of the present disclosure.
FIG. 11 is a schematic structural view of a second energy absorbing mechanism provided by an embodiment of the present disclosure.
FIG. 12 is a schematic cross-sectional view of a second energy absorbing mechanism provided by an embodiment of the present disclosure.
FIG. 13 is an enlarged view of place B in FIG. 12.
FIG. 14 is a schematic structural view of the second energy absorbing mechanism provided by an embodiment of the present disclosure without the energy absorbing housing.

### DESCRIPTION OF THE EMBODIMENTS

In order to make the objectives, technical solutions and advantages of the present disclosure clearer, the technical solution in the embodiment of the present disclosure will be further described in detail below with reference to the accompanying drawings in the embodiments. Clearly, the described embodiments are some, but not all, embodiments of the present disclosure. The components in the embodiments of the disclosure generally described and illustrated in the drawings herein may be arranged and designed in a variety of different configurations.

Thus, the following detailed description of the embodiments of the disclosure provided in the accompanying drawings is not intended to limit the scope of the disclosure as claimed, but is merely representative of selected embodiments of the disclosure. Based on the embodiments of the present disclosure, all other embodiments obtained by those of ordinary skill in the art without creative efforts shall fall within the protection scope of the present disclosure.

It should be noted that like numerals and letters refer to like items in the following figures, so once an item is defined in one figure, it does not require further definition and explanation in subsequent figures.

In the description of the present disclosure, it should be noted that the terms "upper", "lower", "left", "right", "vertical", "horizontal", "inner", "outer", etc. indicate the orientation or the positional relationship based on the orientation or positional relationship shown in the accompanying drawings, or the orientation or positional relationship that the product of the disclosure is normally placed when it is in use. The use of above terms is only for the convenience of describing the present disclosure and simplifying the description, rather than indicating or implying the device or elements referred to must have a particular orientation, be constructed and operated in a particular orientation, and therefore should not be construed as limiting the disclosure.

In the description of the present disclosure, it should also be noted that, unless otherwise expressly specified and limited, the terms "arrangement" and "connection" should be understood in a broad sense, for example, they may refer to a fixed connection or a detachable connection, or integral connection; and the connection may be either mechanical connection or electrical connection. For those of ordinary skill in the art, the specific meanings of the above terms in the present disclosure can be defined depending on specific situations.

In the present disclosure, unless otherwise expressly specified and limited, a first feature "on" or "under" a second feature may include the circumstances that the first and second features are in direct contact, or may include the circumstances that the first and second features are not in direct contact but in contact through another feature between them. Also, the first feature being "above", "over" and "on" the second feature includes the circumstances that the first feature is directly above and obliquely above the second feature, or simply means that the first feature is at a level higher than the second feature. The first feature being "below", "under" and "beneath" the second feature includes the circumstances that the first feature is directly below and diagonally below the second feature, or simply means that the first feature is at a level lower than the second feature.

The following describes the embodiments of the present disclosure in detail, examples of which are illustrated in the accompanying drawings, wherein the same or similar reference numerals refer to the same or similar elements or elements having the same or similar functions throughout. The embodiments described below with reference to the accompanying drawings are exemplary, only used to explain the present disclosure, and should not be construed as a limitation to the present disclosure.

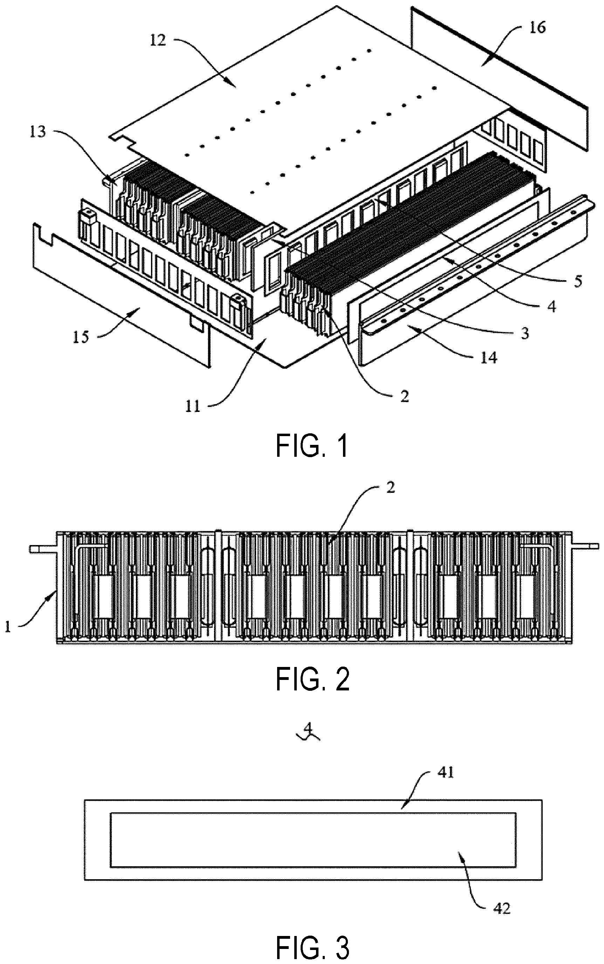

FIG. 1 shows a basic structure of a battery module according to an embodiment of the present disclosure. FIG. 2 shows the internal structure of the battery module. As shown in FIG. 1 and FIG. 2, the battery module in the embodiment of the present disclosure includes a frame 1. The frame 1 includes a bottom plate 11, an upper cover 12, a left side plate 13, a right side plate 14, a front end plate 15 and a rear end plate 16. The above-mentioned components are configured in a rectangular box shape. A plurality of cells 2 are arranged inside the frame 1, and the cells 2 are substantially rectangular packages, whose long and narrow side surfaces parallel to the length direction and the thickness direction contact the bottom plate 11, and are stacked and arranged in the frame 1 in such a way that the length direction is the same as the extending direction of the left side plate 13 and the right side plate 14. The outer surfaces of the left side plate 13 and the right side plate 14 are also provided with hoisting ribs protruding to the outside for hoisting the entire battery module. Busbar components with grid structure are arranged at the inner side of the front end plate 15 and the rear end plate 16 for fixing the corresponding output stage.

For convenience of description, hereinafter, "side plate" refers to "left side plate 13" and "right side plate 14", and "end plate" refers to "front end plate 15" and "rear end plate 16".

The frame 1 of the battery module of the present disclosure is also provided with a position-limiting member 3 therein. As shown in FIG. 1, the position-limiting member 3 is in the shape of a long plate, and is fixed inside the battery module in a manner parallel to the left side plate 13 and the right side plate 14. By setting such a position-limiting member 3, the inside of the frame 1 is divided into a plurality of spaces, so that the plurality of cells 2 originally arranged in sequence to form a stack are divided into a plurality of cell groups, and the various cell groups are separated by the position-limiting member 3 arranged in a fixed manner. When a cell 2 swells, the swelling force and swelling displacement generated by the cell 2 will be isolated by the position-limiting member 3 in the independent space where the cell group is located, and the fixedly arranged position-limiting member 3 will withstand the swelling force generated by the cell group in the spaces separated by the position-limiting member 3, thereby preventing the swelling force and swelling displacement from being transmitted to other battery group. Even if the expanded cells 2 are located in the space separated by the side plate and the position-limiting member 3, since the number of cells 2 in one separation space is limited, the generated swelling force and swelling displacement will not be accumulated to an extent which is unbearable for the strength of the side plate. In this manner, it is possible to prevent the tab welding portion of the outermost cell 2 from breaking and failing due to excessive swelling displacement, and at the same time effectively reduce the swelling force subjected to the side plate in the swelling direction of the cell 2, which significantly improves the safety of the battery module.

Considering the strength limit of the side plate and the position-limiting member 3, the number of position-limiting members 3 may be 2 to 5, and the number of cells 2 in each space separated by the position-limiting member 3 is 3 to 9, or may be 4 to 8 preferably. Such a configuration may ensure that the actual maximum swelling force applied to the left side plate 13 and the right side plate 14 does not exceed the strength limit thereof, and at the same time reduce the number of position-limiting members 3 to realize utilization and lightness of the internal space of the battery module as much as possible.

The frame 1 of the battery module of the present disclosure is further provided with a plurality of buffer members 4, which is inserted between adjacent cells 2 and between the outermost cell 2 and its adjacent side plate respectively. The buffer members 4 inserted between the cells 2 may also be inserted only between two cells 2 connected in series, and the cells 2 connected in parallel are adhered together through double-sided tape or spray adhesive. Of course, in other embodiments, buffer members 4 may also be provided only between adjacent cells 2, and the buffer members 4 may be used to absorb the amount of swelling of the cells 2.

Exemplarily, one or more buffer members 4 may be arranged between every other two adjacent cells 2, and the location and number of the buffer members 4 may be designed according to actual needs, as long as it is ensured that the amount of swelling can be absorbed by the buffer members 4 as much as possible when the cells 2 expand, so as to reduce the amount of displacement transmitted to the other cells 2. No further examples are provided herein.

FIG. 3 shows the structure of the buffer member 4. As shown in FIG. 3, the present disclosure provides a new type of buffer member 4, which includes an outer frame portion 41 and a buffer portion 42, and a hardness of the outer frame portion 41 is greater than a hardness of the buffer portion 42. Preferably, the outer frame portion 41 is made of a metal material with a certain hardness, and the buffer portion 42 is made of a soft polyester elastic material. Since the amount of swelling at the center of the cell 2 is significantly greater than the amount of swelling of the periphery thereof when the cell 2 swells, by providing such a buffer member 4 with a certain rigidity at the periphery and a high buffering performance in the central part, when the buffer portion 42 is utilized to completely absorb the swelling force in the center region of the cell 2, the outer frame portion 41 still maintains the original shape of the buffer member 4, so that almost no deformation or displacement occurs to the buffer member 4, thereby effectively reducing the transmission of displacement of the expanded cell 2 and improving the stability and reliability of the entire battery module.

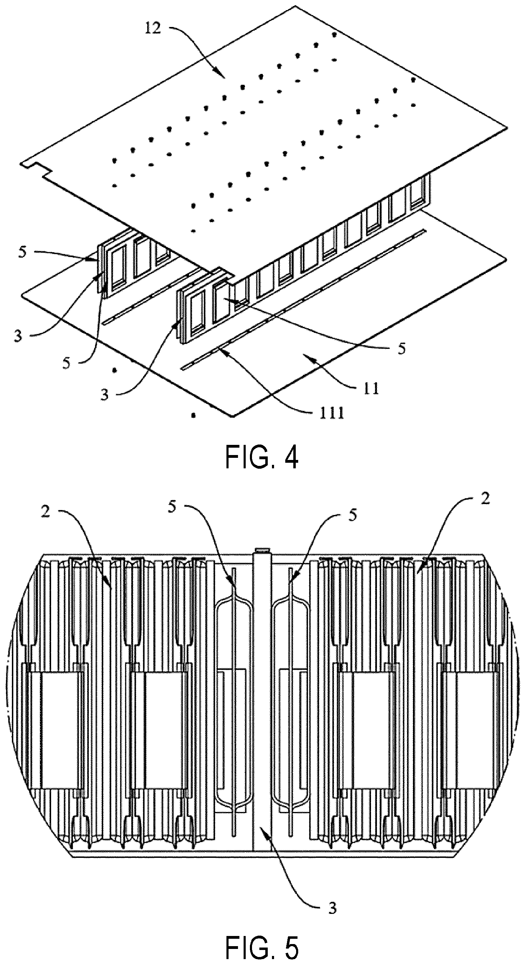

FIG. 4 shows an assembly relationship of the position-limiting member 3 and the bottom plate 11 and the upper cover 12. As shown in FIG. 4, the bottom plate 11 and the upper cover 12 are arranged opposite to each other. At least one of the bottom plate 11 and the upper cover 12 is provided with a positioning groove 111, and the position-limiting member 3 is embedded in the positioning groove 111 for positioning, so as to facilitate the positioning assembly of the position-limiting member 3. In FIG. 4, the position-limiting member 3 is fixedly connected with the bottom plate 11 and the upper cover 12 by bolts. Of course, in other embodiments, the position-limiting member 3 may also be fixedly connected with the bottom plate 11 and the upper cover 12 by welding or riveting. In the embodiment shown in FIG. 4, there are two position-limiting members 3 arranged in parallel in the frame 1 and two positioning grooves 111 correspondingly arranged on the bottom plate 11. By fixing the position-limiting members 3 on the positioning grooves 111, the frame 1 is divided into 3 separate spaces. Clearly, the number of the position-limiting members 3 and the positioning grooves 111 provided here is only an example. As mentioned above, those skilled in the art may reasonably select the number of the positioning grooves 111 and the position-limiting members 3 according to the number of the cells 2 provided in the battery module adopted. The position-limiting member 3 may be made of materials with high strength, high quality and light weight, thus realizing lightness of the entire battery module on the premise of being able to withstand the swelling force of the cell group composed of several cells 2.

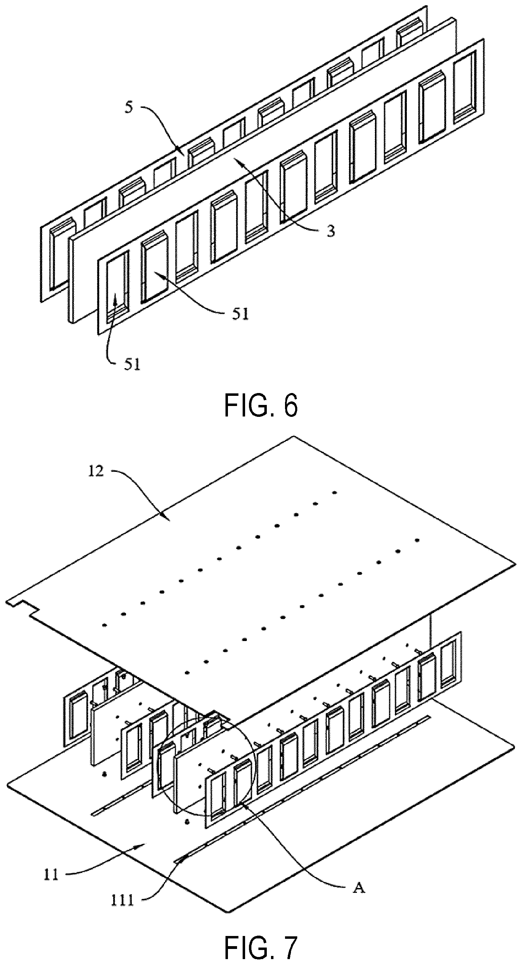

In an embodiment, the frame 1 of the battery module of the present disclosure is further provided with an energy absorbing member 5. As shown in FIG. 4 and FIG. 6, the main body of the energy absorbing member 5 is elongated, and its length is substantially the same as that of the position-limiting member 3. The energy absorbing member 5 is arranged at a position adjacent to the position-limiting member 3, and may be located adjacent to either side or both sides of the position-limiting member 3 for absorbing the swelling force of the cell 2. FIG. 4 and FIG. 5 show the arrangement in which the energy absorbing members 5 are provided on the left and right sides of the position-limiting member 3. As shown in FIG. 4 and FIG. 5, one surface of the energy absorbing members 5 disposed on two adjacent sides of the position-limiting member 3 is in contact with one surface of the cell 2, and the other surface is in contact with the position-limiting member 3. Similar to the purpose of providing the buffer member 4, the purpose of providing the energy absorbing member 5 is to further absorb the displacement generated by the swelling of the cell 2. Therefore, the energy absorbing member 5 may also adopt the same structure and material as the buffer member 4. However, another solution is provided in the embodiments shown in the drawings of the present disclosure. Specifically, the entire energy absorbing member 5 is made of a material having a certain rigidity, and a plurality of protruding energy absorbing portions 51 are formed on the surface thereof. Each of the energy absorbing portions 51 of the energy absorbing member 5 shown in FIG. 4 is a protruding rectangle, and a plurality of rectangular protruding energy absorbing portions 51 are arranged at intervals along the length direction of the energy absorbing member 5. The shape of each of the energy absorbing portions 51 is not particularly limited, but preferably regular shapes of the same shape (which means the same size and shape for complete overlapping) arranged at equal intervals. With such structure, when the adjacent cells 2 expand to produce a squeezing displacement on the energy absorbing member 5, the energy absorbing portions 51 protruding from the surface of the energy absorbing member 5 will first be subjected to the thrust generated by such displacement, and local deformation or even local recess will occur. Under the circumstances, the original thickness of the protruding structure is pressed flat to a certain extent, thereby absorbing a part of the thrust generated by the swelling, thus reducing or even eliminating the influence caused by the swelling force. The energy absorbing members 5 are arranged at adjacent positions on both sides of the position-limiting member 3. Such symmetrical structure further improves the uniformity of force and structural stability. In the meantime, since the main body of the energy absorbing member 5 is made of a rigid material, local deformation caused by force to the energy absorbing portions 51 can hardly affect the set shape of the main body, and to a certain extent, a reinforcing effect for the position-limiting member 3 may be realized, so that the internal stability of the entire battery module is further enhanced.

In the above-mentioned embodiment, FIG. 6 further shows the specific structure of the energy absorbing member 5 and the cooperation between the energy absorbing member 5 and the position-limiting member 3. As shown in FIG. 6, a plurality of energy absorbing portions 51 provided on the energy absorbing member 5 are arranged at intervals on the energy absorbing member 5 in the same shape, so that all the energy absorbing portions 51 may be aligned with the surface in contact with the cell 2, and it is ensured that each of the energy absorbing portions 51 is in contact with the cell 2 uniformly. Although each of the energy absorbing portions 51 shown in the figure is formed in a protruding rectangular shape, those skilled in the art may set the energy absorbing portions 51 into any shape as required. In the embodiment of the present disclosure, the protruding directions of the adjacent energy absorbing portions 51 are opposite, that is, the protrusions are alternately arranged. Such design allows the energy absorbing portions 51 to protrude upward on both sides of the energy absorbing member 5, so it may be ensured that the component is subjected to force uniformly and has a stable structure, thereby improving the energy absorbing effect of the energy absorbing member 5. Moreover, the arrangement relationship between the energy absorbing member 5 and the position-limiting member 3 shown in FIG. 5 and FIG. 6 is that the two energy absorbing members 5 arranged on the left and right sides of the same position-limiting member 3 are symmetrical relative to the axis of the position-limiting member 3. More specifically, the two energy absorbing members 5 on the left and right sides of the position-limiting member 3 are arranged such that the protrusions of the energy absorbing portions 51 of the two energy absorbing members 5 are axially symmetrical with respect to the position-limiting member 3. Such symmetrical structure further improves the uniformity of force and structural stability. Exemplarily, the energy absorbing member 5 may be an integrally formed metal plate, and the energy absorbing portions 51 are formed on the metal plate by punching. In other embodiments, the energy absorbing member 5 may also be a rubber plate with certain plasticity, the energy absorbing portions 51 may be formed by injection molding, and the energy absorbing portion 51s absorb the swelling force of the cell 2 through elastic deformation.

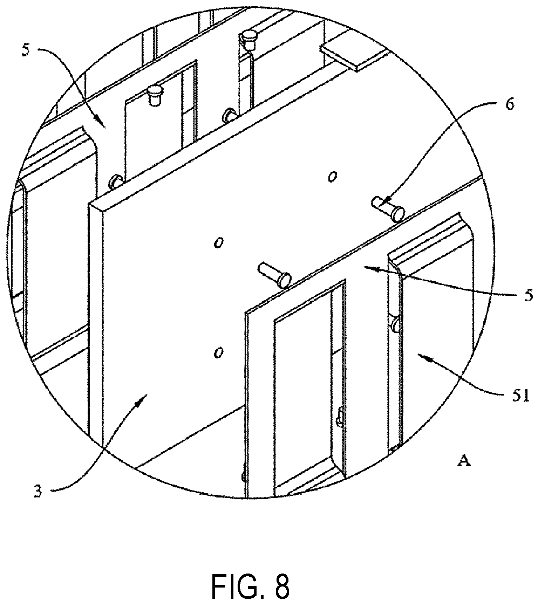

In the above embodiment, the energy absorbing member 5 and the position-limiting member 3 in FIG. 4 are only placed adjacent to each other, and there is no connecting structure between them. FIG. 7 and FIG. 8 show an assembly configuration in which the energy absorbing member 5 and the position-limiting member 3 are connected by a connecting member. As shown in FIG. 7 and FIG. 8, the battery module further includes a positioning member 6. A plurality of positioning members 6 are arranged along the length direction of the position-limiting member 3 to fixedly assemble the energy absorbing member 5 on the position-limiting member 3. Exemplarily, the energy absorbing member 5 may be assembled on the position-limiting member 3 through two rows of positioning members 6, and the two rows of positioning members 6 are arranged side by side along the width direction of the position-limiting member 3 to ensure that the energy absorbing member 5 can be assembled stably, thus preventing the energy absorbing member 5 from being moving away from its position in the frame 1 when being squeezed and affecting the energy absorbing effect. As shown in the specific embodiment of FIG. 8, the positioning member 6 is set as a bolt, and the energy absorbing member 5 is nailed on the position-limiting member 3 by using the positioning member 6. Compared with the above-mentioned technical solution which is not provided with the connecting member, the lateral displacement of the energy absorbing member 5 relative to the position-limiting member 3 may be avoided, and the reliability and stability of the module structure may be further enhanced.

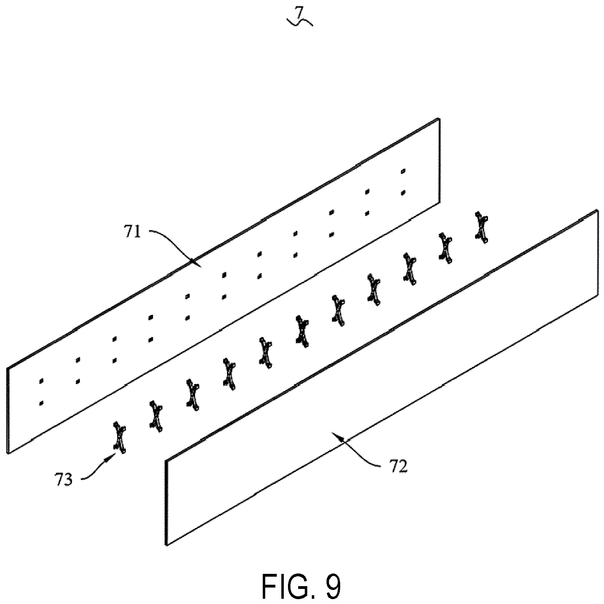

In an embodiment, the frame 1 of the battery module of the present disclosure is further provided with a first energy absorbing mechanism 7 therein. As shown in FIG. 9, the first energy absorbing mechanism 7 includes a first support member 71, a second support member 72, and a first energy absorbing assembly 73. The first support member 71 and the second support member 72 are arranged in parallel and spaced apart along the stacking direction of the cell and are connected to both sides of the first energy absorbing assembly 73, and the thickness of the first energy absorbing assembly 73 in the stacking direction of the cell is adjustable. The function of the first energy absorbing mechanism 7 is the same as the function of the energy absorbing member 5 in the above-mentioned embodiment, so the details will not be repeated here. In addition, it should be noted that the same battery module may include both the first energy absorbing mechanism 7 and the energy absorbing member 5, or include only the first energy absorbing mechanism 7 or the energy absorbing member 5, which is not limited in the disclosure. Exemplarily, the first support member 71 abuts against the position-limiting member 3, and the second support member 72 abuts against the cell 2. When the cell 2 swells, the swelling force of the cell 2 pushes the second support member 72 to move in the direction of the first support member 71, and squeezes the first energy absorbing assembly 73, so that the first energy absorbing assembly 73 is pressed thin to absorb the swelling force of the cell 2. When the swelling force of the cell 2 disappears, the first energy absorbing assembly 73 may be restored to the original state, thereby pushing the second support member 72 to move away from the first support member 71. Of course, the first support member 71 may also abut against the cell 2, and the second support member 72 may also abut against the position-limiting member 3. In order to improve the energy absorbing capability of the first energy absorbing mechanism 7, a plurality of first energy absorbing assemblies 73 are spaced apart between the first support member 71 and the second support member 72 along the length direction of the cell 2. Preferably, the structural dimensions of the plurality of first energy absorbing assemblies 73 are the same. For example, 11 first energy absorbing assemblies 73 are spaced apart between the first support member 71 and the second support member 72 along the length direction of the cell 2, and of course, the number of first energy absorbing assemblies 73 may be set freely between 3 and 15.

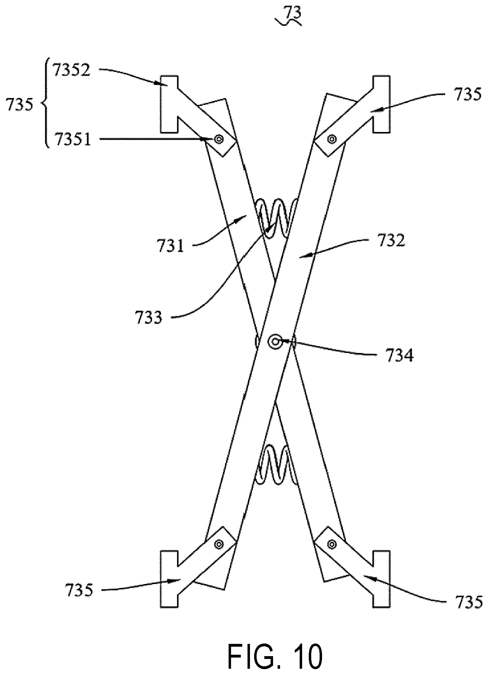

In the above embodiment, as shown in FIG. 10, the first energy absorbing assembly 73 includes a first member 731, a second member 732, a reset member 733, a rotating shaft 734, and an adapter 735. The first member 731 and the second member 732 are pivotally connected through the rotating shaft 734. Specifically, the middle position of the first member 731 and the middle position of the second member 732 are rotatably connected through the rotating shaft 734. Both ends of the reset member 733 are respectively connected to the first member 731 and the second member 732, and two reset members 733 are respectively disposed on both sides of the rotating shaft 734. Both ends of the first member 731 are connected to the first support member 71 and the second support member respectively 72 through the adapter 735. Both ends of the second member 732 are connected to the first support member 71 and the second support member 72 respectively through the adapter 735. In FIG. 10, the adapter 735 includes a pivot portion 7351 and a fixed portion 7352, the pivot portion 7351 is pivotally connected to the first member 731 or the second member 732, and the fixed portion 7352 is fixedly connected to the first support member 71 or the second support member 72. Through the design of the adapter 735, when the distance between the first support member 71 and the second support member 72 decreases or increases, the first support member 71 and the second support member 72 are kept horizontal, and the strength of connection between the first support member 71 and the first member 731 and the second member 732 may be ensured, as well as the strength of connection between the second support member 72 and the first member 731 and the second member 732 may be ensured. When the cell 2 swells, the swelling force of the cell 2 pushes the second support member 72 to move in the direction of the first support member 71 and squeezes the first energy absorbing assembly 73. The reset member 733 in the first energy absorbing assembly 73 is compressed, so the first energy absorbing assembly 73 becomes thin and absorbs the swelling force of the cell 2. When the swelling force of the cell 2 disappears, the first member 731 and the second member 732 in the first energy absorbing assembly 73 may rotate relative to each other under the action of the reset member 733 and push the second support member 72 to move away from the first support member 71, so that the first energy absorbing mechanism 7 restores to its original state. In addition, in the above embodiment, at least one reset member 733 is provided on both sides of the rotating shaft 734. For example, both sides of the rotating shaft 734 are provided with 2 to 5 (which may be set freely) reset members 733.

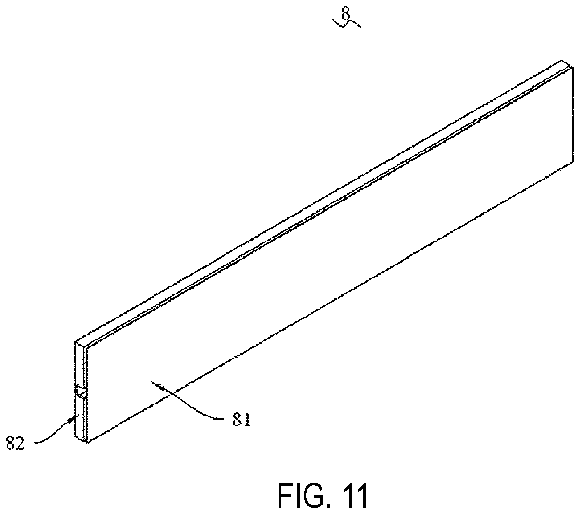

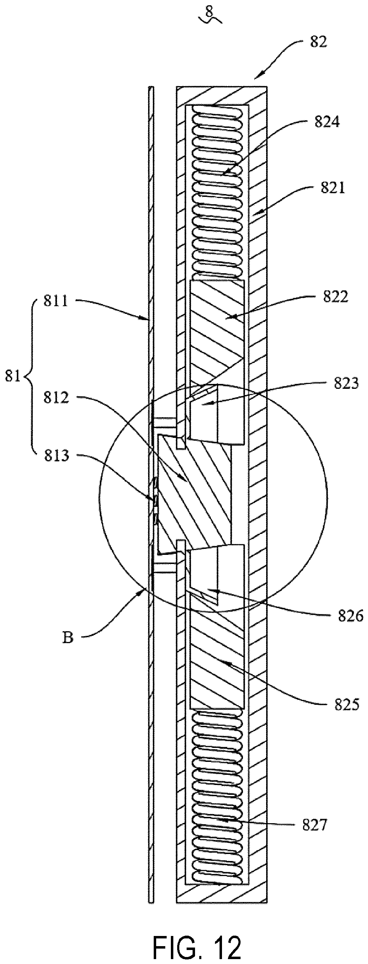

In an embodiment, the frame 1 of the battery module of the present disclosure is further provided with a second energy absorbing mechanism 8 therein. The function of the second energy absorbing mechanism 8 is the same as that of the energy absorbing member 5 in the above-mentioned embodiment, so the details are not repeated here. In addition, it should be noted that the same battery module may include the first energy absorbing mechanism 7, the second energy absorbing mechanism 8, and the energy absorbing member 5 simultaneously, or may only include the first energy absorbing mechanism 7 or the second energy absorbing mechanism 8, or the energy absorbing member 5, which is not limited in the disclosure. As shown in FIG. 11 and FIG. 12, the second energy absorbing mechanism 8 includes a block-pushing assembly 81 and a second energy absorbing assembly 82 spaced apart along the stacking direction of the cells. The space between the block-pushing assembly 81 and the second energy absorbing assembly 82 is adjustable, so that the swelling force of the cells 2 may be absorbed. The block-pushing assembly 81 abuts against the cell 2, the second energy absorbing assembly 82 abuts against the position-limiting member 3, and the block-pushing assembly 81 may move toward the second energy absorbing assembly 82 under the action of the swelling force of the cell 2.

In the above embodiment, as shown in FIG. 12, the block-pushing assembly 81 includes a pushing plate 811, a pushing block 812 and an elastic member 813. The pushing block 812 is set on the pushing plate 811 through the elastic member 813, and the pushing block 812 may move elastically along the stacking direction of the cells 2 relative to the pushing plate 811 to absorb the swelling force of the cells 2. As shown in FIG. 12, the second energy absorbing assembly 82 includes an energy absorbing housing 821, a first abutting member 822, a first sliding member 823, a first energy absorbing and reset member 824, a second abutting member 825, a second sliding member 826, and a second energy absorbing and reset element 827. The first abutting member 822 and the first sliding member 823 both are slidably disposed in the energy absorbing housing 821. The first energy absorbing and reset member 824 is compressed in the energy absorbing housing 821 and the first abutting member 822. The first sliding member 823 abuts against one side of the pushing block 812; the second abutting member 825 and the second sliding member 826 both are slidably arranged in the energy absorbing housing 821. The second abutting member 825 and the first abutting member 822 are arranged symmetrically. The second sliding member 826 and the first sliding member 823 are arranged symmetrically. The second energy absorbing and reset member 827 is connected between the energy absorbing housing 821 and the second abutting member 825, and the second sliding member 826 abuts against the other side of the pushing block 812. When the swelling force of the cell 2 acts on the pushing plate 811 to move the pushing plate 811 toward the second energy absorbing assembly 82, the pushing block 812 makes the first sliding member 823 and the second sliding member 826 move away from each other, and causes the first abutting member 822 and the second abutting member 825 to move away from each other, thereby compressing the first energy absorbing and reset member 824 and the second energy absorbing and reset member 827. In FIG. 12, the longitudinal crosssection shape of the pushing block 812 is an isosceles trapezoid, the first sliding member 823 and the second sliding member 826 are symmetrically arranged, and the first sliding member 823 and the second sliding member 826 respectively abut against two waist sides of the pushing block 812. When the pushing plate 811 drives the pushing block 812 to move close to the second energy absorbing assembly 82, the two waist sides of the pushing block 812 may drive the first sliding member 823 and the second sliding member 826 to move away from each other, and then push the first abutting member 822 and the second abutting member 825 to move away from each other. The first energy absorbing and reset member 824 and the second energy absorbing and reset member 827 are further compressed. In the process, the first energy absorbing and reset member 824, the second energy absorbing and reset member 827, and the elastic member 813 may all absorb the swelling force of the cell 2. When the swelling force of the cell 2 disappears, the elastic force of the first energy absorbing and reset member 824 and the second energy absorbing and reset member 827 is able to push the first abutting member 822 and the second abutting member 825 to move relative to each other, thereby squeezing the first sliding member 823 and the second sliding member 826 to move relative to each other. Under the squeezing action of the first sliding member 823 and the second sliding member 826, the pushing block 812 is pushed to move away from the second energy absorbing assembly 82. The overall thickness of the second energy absorbing mechanism 8 increases until the second energy absorbing mechanism 8 restores to its original state.

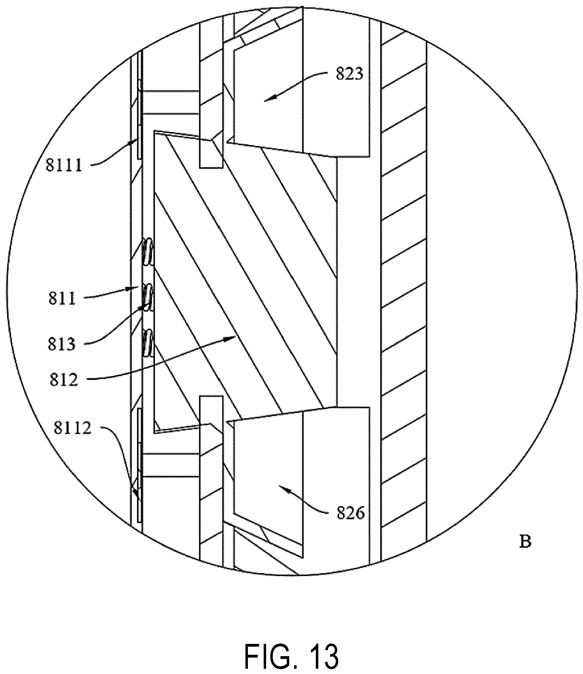

FIG. 13 is a partial enlarged view of FIG. 12, and FIG. 13 shows a cooperation relationship between the first sliding member 823 and the second sliding member 826 and the pushing plate 811. As shown in FIG. 13, the pushing plate 811 is provided with a first position-limiting guide groove 8111 and a second position-limiting guide groove 8112. The first position-limiting guide groove 8111 and the second position-limiting guide groove 8112 are respectively disposed on both sides of the pushing block 812. One end of the first sliding member 823 is slidably engaged with the first position-limiting guide groove 8111, and one end of the second sliding member 826 is slidably engaged with the second position-limiting guide groove 8112. Such design may ensure that the first sliding member 823 and the second sliding member 826 move stably along a specific direction, so that the energy absorbing effect of the second energy absorbing mechanism 8 is stable and reliable.

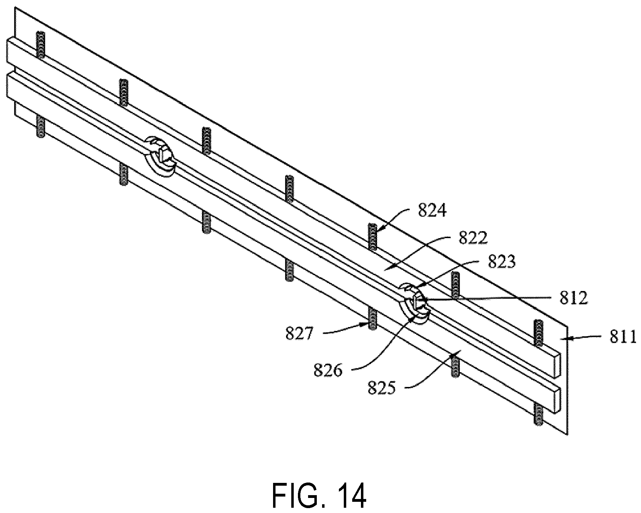

FIG. 14 shows a schematic structural view of the second energy absorbing mechanism 8 without the energy absorbing housing 821. For the second energy absorbing assembly 82, one first abutting member 822, one second abutting member 825, two first sliding members 823, two second sliding members 826, seven first energy absorbing and reset members 824 and seven second energy absorbing and reset members 827 are provided in the energy absorbing housing 821. The number of the first energy absorbing and reset members 824 and the second energy absorbing and reset members 827 is not limited to seven, and may be any number between 2 and 15. The number of the first sliding member 823 and the second sliding member 826 is not limited to two, and may be any number between 1 and 15. The number of the first abutting member 822 and the second abutting member 825 is preferably one, which may ensure the stability and reliability of the output of elastic force of the first energy absorbing and reset members 824 and the second energy absorbing and reset members 827. In FIG. 14, the first sliding member 823 and the second sliding member 826 are symmetrically arranged, and the first sliding member 823 is provided with a concave portion that cooperates with the pushing block 812 to ensure stable cooperation between the first sliding member 823 and the pushing block 812, and the second sliding member 826 is provided with a concave portion that cooperates with the pushing block 812 to ensure stable cooperation between the second sliding member 826 and the pushing block 812. Preferably, the matching surface of the first sliding member 823 and the first abutting member 822 is an inclined surface. When the thickness of the first abutting member 822 is constant, the area of the matching surface of the first sliding member 823 and the first abutting member 822 is increased, so as to ensure the stability of the force transmission between the two. Similarly, the matching surface of the second sliding member 826 and the second abutting member 825 is an inclined surface. When the thickness of the second abutting member 825 is constant, the area of the matching surface of the second sliding member 826 and the second abutting member 825 is increased, so as to ensure the stability of the force transmission between the two.

This embodiment further provides an electronic device (not shown in the figure), including the above-mentioned battery module. By applying the battery module in the electronic device, the amount of thermal swelling of the battery module is small, the performance of the battery module is stable, and the safety of the electronic device is improved.

Optionally, the electronic device may be an electric vehicle.

## Claims

1. A battery module, comprising:
a frame (1);
a plurality of cells (2) stacked in the frame (1) in parallel;
at least one position-limiting member (3) disposed in the frame (1) and dividing the frame (1) into a plurality of spaces for the plurality of cells (2) being evenly arranged; and
a plurality of buffer members (4) respectively disposed between the adjacent cells (2) and/or between the cell (2) and the frame (1).

2. The battery module according to claim 1, further comprising an energy absorbing member (5), wherein the energy absorbing member (5) is disposed at a position adjacent to the at least one position-limiting member (3).

3. The battery module according to claim 2, wherein the energy absorbing member (5) is provided with a plurality of energy absorbing portions (51), and the plurality of the energy absorbing portions (51) are arranged at intervals on the energy absorbing member (5) in the same shape.

4. The battery module according to claim 3, wherein each of the plurality of energy absorbing portions (51) is formed in a protruding shape, and the adjacent energy absorbing portions (51) protrude in opposite directions.

5. The battery module according to claim 3, further comprising a positioning member (6), wherein the positioning member (6) fixes the energy absorbing member (5) on the at least one position-limiting member (3).

6. The battery module according to any one of claims 2-5, wherein both sides of the at least one position-limiting member (3) are provided with the energy absorbing members (5), and the two energy absorbing members (5) provided on the both sides of the position-limiting members (3) are symmetrical with respect to the at least one position-limiting member (3).

7. The battery module according to claim 1, wherein each of the plurality of buffer members (4) comprises an outer frame portion (41) and a buffer portion (42), and a hardness of the outer frame portion (41) is greater than a hardness of the buffer portion (42).

8. The battery module according to claim 1, wherein the frame (1) comprises a bottom plate (11) and an upper cover (12), and at least one of the bottom plate (11) and the upper cover (12) is provided with a positioning groove (111) for at least a part of the at least one position-limiting member (3) to be embedded and positioned.

9. The battery module according to claim 1, wherein each of the plurality of spaces divided by the at least one position-limiting member (3) has 3 to 9 of the cells (2) respectively.

10. An electronic device, comprising: the battery module as claimed in any one of claims 1-9.
